(19) Europäisches Patentamt

European Patent Office

Office européen des brevets

(11) EP 1 452 757 A2

(12) **EUROPEAN PATENT APPLICATION**

(43) Date of publication:
01.09.2004 Bulletin 2004/36

(51) Int Cl.⁷: **F16C 33/78**

(21) Application number: 04004382.0

(22) Date of filing: 26.02.2004

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **28.02.2003 JP 2003052419**

(71) Applicant: **Denso Corporation**
**Kariya-city, Aichi-pref., 448-8661 (JP)**

(72) Inventors:
• **Komeda, Tetsuya**
**Kariya-city Aichi-pref., 448-8661 (JP)**

• **Uchiyama, Hidetoshi**
**Kariya-city Aichi-pref., 448-8661 (JP)**
• **Arai, Masato**
**Kariya-city Aichi-pref., 448-8661 (JP)**

(74) Representative: **Grill, Matthias, Dipl.-Ing.**
**Patentanwälte**
**Tiedtke-Bühling-Kinne & Partner**
**Bavariaring 4**
**80336 München (DE)**

(54) **Rolling bearing of throttle valve device**

(57)    In a throttle valve device for an internal combustion engine, a stepped portion (51) is formed on an outer peripheral surface of an inner ring (41) on a bore side (on an air intake passage side) in order to limit movement of a lip portion (55) of a first lip seal (44) on the bore side toward an inside of a rolling bearing (4).

Thus, even if a high supercharging pressure above an atmospheric pressure acts on the first lip seal (44), deformation and curling of the lip portion (55) due to the supercharging pressure can be prevented. As a result, separation of a second lip seal (45) on a gear cover side (on an outside) from the rolling bearing (4) can be prevented.

**FIG. 1**

# Description

The present invention relates to a rolling bearing including multiple rolling members, which are accommodated between an inner ring and an outer ring and roll between orbit surfaces of the inner ring and the outer ring, and first and second sealing members. Specifically, the present invention relates to an internal combustion engine throttle valve device capable of preventing separation of at least one of first and second sealing members from a rolling bearing, which rotatably holds a throttle shaft to a bearing accommodating portion of a throttle body.

Conventionally, there is a throttle valve device for an internal combustion engine for regulating a quantity of intake air flowing through an air intake passage of a throttle body by driving a throttle shaft and by changing an opening degree of a throttle valve held by the throttle shaft, for instance. A rolling bearing is fitted between an outer periphery of the throttle shaft and a bearing accommodating portion of the throttle body for rotatably holding the throttle shaft to the bearing accommodating portion of the throttle body.

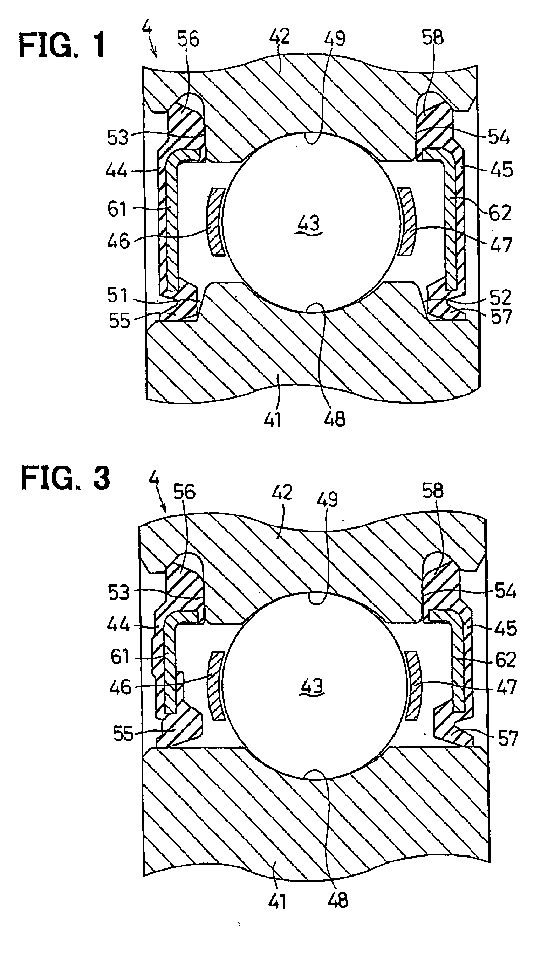

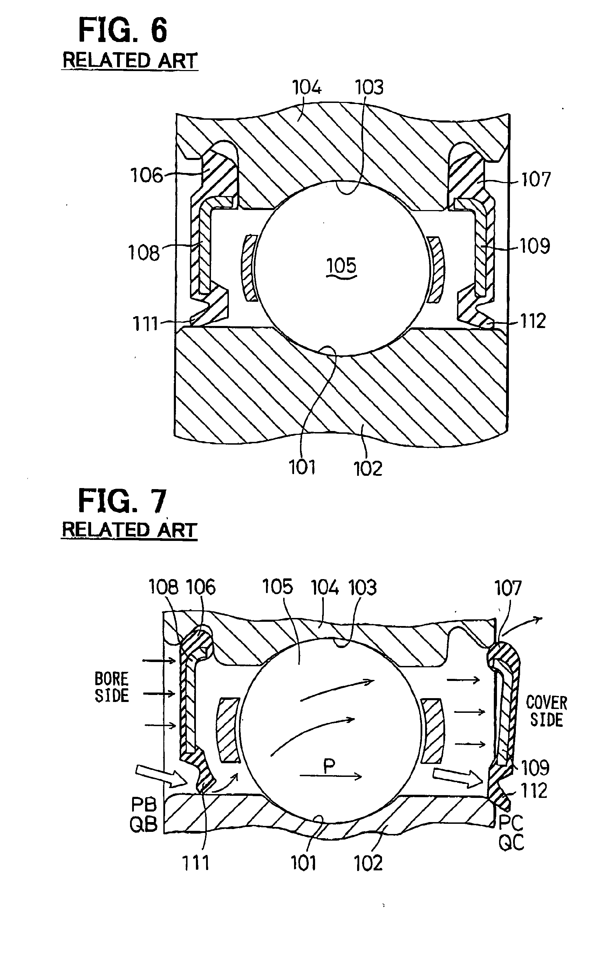

As shown in Fig. 6, the rolling bearing includes an inner ring 102, an outer ring 104, multiple steel balls 105 and two lip seals 106, 107 as disclosed in Japanese Patent Application Unexamined Publication No. H11-200899 (Pages 1 to 7, Figs. 1 to 5), for instance. The inner ring 102 is fitted to an outer periphery of the throttle shaft and is formed with a groove portion 101 on an orbit surface. The outer ring 104 is fitted to an inner periphery of the bearing accommodating portion of the throttle body and is formed with a groove portion 103 on an orbit surface facing the inner ring 102. The multiple steel balls 105 are accommodated between the two orbit rings of the inner ring 102 and the outer ring 104 and roll between the orbit surfaces of the inner ring 102 and the outer ring 104. The lip seals 106, 107 are fitted between the two orbit rings so that the lip seals 106, 107 are disposed on both sides of the steel balls 105 in an axial direction. The two lip seals 106, 107 are formed of ring-shaped rubber-based elastic members, which are fitted in ring-shaped clearances formed between the two orbit rings and are reinforced with metallic reinforcing members 108, 109. The lip seals 106, 107 elastically change forms thereof in radial directions and fluid-tightly contact the two orbit rings 102, 104 when the lip seals 106, 107 are sandwiched between the two orbit rings 102, 104. The lip seals 106, 107 respectively include lip portions 111, 112 at contacting portions slidably contacting at least the inner ring 102.

However, in the case where the conventional internal combustion engine throttle valve device is used in a turbocharger type supercharged engine capable of increasing an intake pressure of the intake air above an atmospheric pressure and of supplying high-density air into a cylinder, a pressure difference between the intake pressure in an air intake passage formed inside a bore wall portion of the throttle body and the atmospheric pressure outside the bore wall portion of the throttle body is large compared to the case of a natural air intake type internal combustion engine. Therefore, a trouble that a lip seal 107 on a right side in Fig. 6 (an outside, or a side opposite to the air intake passage side) separates is caused as shown in Fig. 7.

As shown in Fig. 7, a high pressure is applied to the lip seal 106 on the left side (the air intake passage side) in Fig. 7 by the supercharging pressure. The lip portion 111 of the lip seal 106 is curled up toward an inside of the rolling bearing (a space in which the multiple steel balls 105 are accommodated) and the pressure inside the rolling bearing increases. The pressure acts also on the outside lip seal 107. The outside lip seal 107 is curled up toward the outside of the rolling bearing and the lip seal 107 separates from the rolling bearing. Thus, the above trouble is caused. The outside lip seal 107 originally has the function of preventing intrusion of extraneous matters such as dust or moisture into the rolling bearing or leakage of lubrication oil held inside the rolling bearing to the outside. Therefore, in the case where the lip seal 107 separates from the rolling bearing, such a problem that the extraneous matters such as the dust or the moisture intrude into the rolling bearing or the lubrication oil held inside the rolling bearing leaks outward will be caused.

If rigidity of the lip seal 106 on the air intake passage side is simply reinforced so that the lip seal 106 can withstand the intake pressure of the intake air, sliding resistance of the rolling bearing will be increased. Specifically in the case of an electronic control type throttle valve device for controlling the air intake quantity drawn into the cylinder of the internal combustion engine by driving the throttle valve and the throttle shaft to rotate by using a driving motor, driving load of the driving motor will be increased. As a result, the size of the driving motor will be enlarged and a cost will be increased.

It is therefore an object of the present invention to provide a rolling bearing capable of preventing separation of at least one of two sealing members. It is another object of the present invention to provide a rolling bearing capable of preventing an outside sealing member from separating from the rolling bearing even if an air intake passage side sealing member out of the two sealing members receives an intake pressure higher than an atmospheric pressure.

According to an aspect of the present invention, a rolling bearing for rotatably holding a shaft to a bearing accommodating portion of a fixed member such as a housing or a rotating member has two sealing members fitted between two orbit rings of an inner ring and an outer ring so that the two sealing members are disposed on both sides of rolling members in an axial direction. Rigidity of the sealing member receiving a relatively high pressure from one side in the axial direction is higher than rigidity of the sealing member receiving a relatively low pressure from the other side in the axial direction. Thus, even if the pressure acts on the sealing member having the higher rigidity, the pressure inside the rolling bearing, or the pressure in a rolling member accommodating portion, can be reduced by leaking air from the sealing member having the lower rigidity. Thus, the separation of the sealing member having the lower rigidity can be prevented.

Features and advantages of embodiments will be appreciated, as well as methods of operation and the function of the related parts, from a study of the following detailed description, the appended claims, and the drawings, all of which form a part of this application. In the drawings:

Fig. 1 is a sectional diagram showing a rolling bearing of an electronic control type throttle valve control device for a turbocharger type supercharged engine according to a first embodiment of the present invention;

Fig. 2 is a sectional diagram showing the electronic control type throttle valve control device according to the first embodiment;

Fig. 3 is a sectional diagram showing a rolling bearing according to a second embodiment of the present invention;

Fig. 4 is a sectional diagram showing a rolling bearing according to a third embodiment of the present invention;

Fig. 5 is a sectional diagram showing a rolling bearing according to a fourth embodiment of the present invention;

Fig. 6 is a sectional diagram showing a rolling bearing of a related art; and

Fig. 7 is a sectional diagram showing the rolling bearing of the related art.

(First Embodiment)

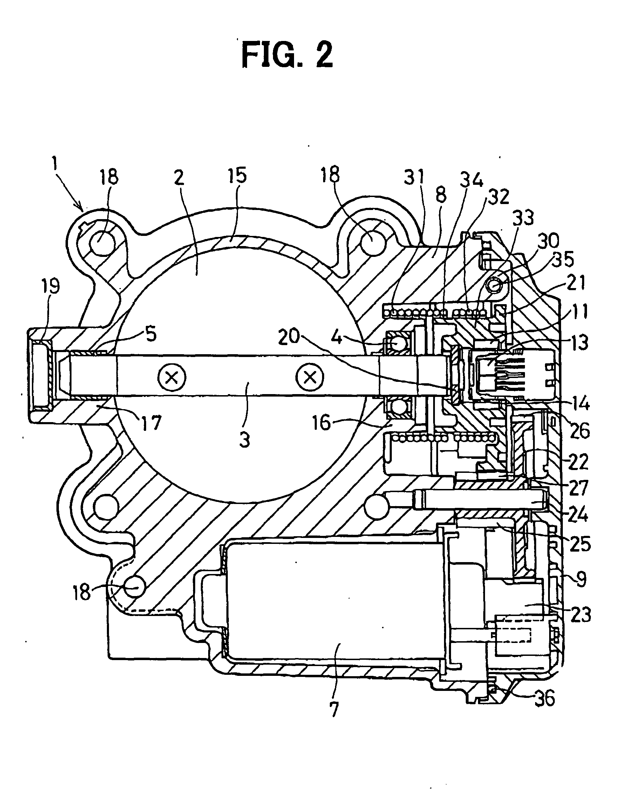

Referring to Fig. 1, a rolling bearing according to the first embodiment is illustrated. The rolling bearing of the first embodiment is used in an electronic control type throttle valve control device for a turbocharger type supercharged engine shown in Fig. 2.

The electronic control type throttle valve control device of the present embodiment is an internal combustion engine intake air control device including a throttle body 1, a throttle valve 2, a throttle shaft 3, a rolling bearing 4, a driving motor (an actuator) 7, a mechanical reduction gear (a power transmission device), an actuator case and an engine control unit (an ECU). The throttle body 1 provides an air intake passage leading to respective cylinders of a turbocharger type supercharged engine (an engine, hereafter). The throttle valve 2 is accommodated in the air intake passage so that the,throttle valve 2 can open or close. The throttle valve 2 regulates an intake quantity of the air taken into the engine. The throttle shaft 3 holds the throttle valve 2 and is held to the throttle body 1. The rolling bearing 4 rotatably holds the throttle shaft 3 to the throttle body 1. The driving motor 7 drives the throttle shaft 3 to rotate. The mechanical reduction gear transmits rotational output of the driving motor 7 to the throttle valve 2. The actuator case accommodates the driving motor 7 and the mechanical reduction gear. The ECU electronically controls the driving motor 7.

The actuator case of the present embodiment is formed of a gear case (a gear housing, a case main body) 8 integrally formed on an outer wall surface of the throttle body 1, and a gear cover (a sensor cover, a cover) 9 for blocking an opening of the gear case 8 and for holding a throttle position sensor. The electronic control type throttle valve control device controls rotation speed of the engine by controlling the intake quantity of the air flowing into the engine, based on a depressed degree (an accelerator operation degree) of an accelerator pedal of an automobile. The ECU is connected with an accelerator position sensor, which converts the depressed degree of the accelerator pedal into an electric signal (an accelerator position signal) and outputs the depressed degree of the accelerator pedal to the ECU.

The electronic control type throttle valve control device includes the throttle position sensor, which converts an opening degree of the throttle valve 2 into an electric signal (a throttle opening degree signal) and outputs the opening degree of the throttle valve 2 to the ECU. The throttle position sensor includes a rotor, a divided type permanent magnets 11 (substantially in the shape of rectangles), divided type yokes (magnetic bodies substantially in the shape of arcs), hall elements 13, terminals, and a stator 14. The rotor is fastened to a right end of the throttle shaft 3 in Fig. 2 through a fastening method such as caulking. The permanent magnets 11 function as magnetic field sources. The yokes are magnetized by the permanent magnets 11. The hall elements 13 are integrally disposed on a side of the gear cover 9 so that the hall elements 13 face the permanent magnets 11. The terminals are formed of thin metallic plates having electrical conductivity and electrically connect the hall elements 13 with the exterior ECU. The stator 14 is formed of metallic material (magnetic material) of iron family and converges magnetic flux to the hall elements 13.

The permanent magnets 11 and the yokes are fixed to an inner peripheral surface of the rotor, which is formed in a valve gear 21 as one of elements of the mechanical reduction gear through insert molding, with an adhesive and the like. The divided type permanent magnet 11 is disposed between two adjacent yokes. Magnetized directions of the divided type permanent magnets 11 of the present embodiment are aligned in a vertical direction in Fig. 2 so that an upper side becomes a north pole and a lower side becomes a south pole. Thus, the rectangle permanent magnets 11 are disposed so that the same poles thereof are directed to the same direction. The hall elements 13 correspond to non-contact type detection elements and are disposed so that the hall elements 13 face the inner peripheral surfaces of the permanent magnets 11. If a magnetic field of the north pole or the south pole is generated at a detection surface of the hall element 13, the hall element 13 generates electromotive force in accordance with the magnetic field. If the north pole magnetic field is generated, a positive electric potential is generated. If the south pole magnetic field is generated, a negative electric potential is generated.

The throttle body 1 is formed of metallic material such as die-cast aluminum. The throttle body 1 is a device (a throttle housing) for rotatably holding the throttle valve 2 in an air intake passage formed in a bore wall portion 15 in the shape of a cylindrical pipe so that the throttle valve 2 can rotate freely along a direction of the rotational movement in a range between a fully closed position and a fully open position. The throttle body 1 is fastened and fixed to an intake manifold of the engine through fastening members such as fixing bolts or fastening screws.

The throttle body 1 is formed with a cylindrical bearing accommodating portion (a bearing holding portion, a bearing holder) 16 for rotatably holding the right end (the one end) of the throttle shaft 3 in Fig. 2 through the rolling bearing 4 and with another cylindrical bearing accommodating portion (a bearing holding portion, a bearing holder) 17 for rotatably holding the left end (the other end) of the throttle shaft 3 in Fig. 2 through a dry bearing 5. Multiple penetration holes 18 are formed in an outer peripheral portion of the bore wall portion 15. The fastening members such as the fixing bolts or the fastening screws are screwed into the multiple penetration holes 18. The left end of the bearing accommodating portion 17 in Fig. 2 is formed with an opening. A plug 19 is fitted to the left end opening of the bearing accommodating portion 17 to block the opening.

The throttle valve 2 is a butterfly-shaped rotary valve formed of metallic material or resin material substantially in the shape of a circular plate. The throttle valve 2 controls the intake quantity of the air drawn into the engine. The throttle valve 2 is screwed and fastened to the throttle shaft 3 with the fastening members such as the fastening screws in a state in which the throttle valve 2 is inserted into a valve insertion hole formed in a valve holding portion of the throttle shaft 3, which rotates integrally with the throttle valve 2.

The throttle shaft 3 is formed of metallic material in the shape of a round bar. Both ends of the throttle shaft 3 are rotatably or slidably held by both accommodating portions 16, 17 of the throttle body 1. A metallic member 20 in the shape of a circular ring is attached to the right end of the throttle shaft 3 in Fig. 2 for caulking the inner periphery of the valve gear 21 as one of the components of the mechanical reduction gear. The metallic member 20 is formed on the valve gear 21 through the insert molding.

The driving motor 7 is the electric actuator (the power source), whose motor shaft rotates when the driving motor 7 is energized. The mechanical reduction gear reduces the rotating speed of the driving motor 7 at a predetermined reduction ratio. The mechanical reduction gear includes the valve gear (the valve side gear, the driven gear) 21 fixed to the one end (the right end in Fig. 2) of the throttle shaft 3, an intermediate reduction gear (an intermediate gear) 22, which rotates while meshing with the valve gear 21, and a pinion gear (a motor side gear, a drive gear) 23 fixed to the outer periphery of the motor shaft of the driving motor 7. The mechanical reduction gear functions as valve driving means for driving the throttle valve 2 and the throttle shaft 3 to rotate.

The intermediate reduction gear 22 is formed of resin material in a single piece of a predetermined shape. The intermediate reduction gear 22 is fitted to an outer periphery of an intermediate shaft 24, which provides a center of rotation. The intermediate reduction gear 22 is formed with a small diameter gear 25 meshed with the valve gear 21 and with a large diameter gear 26 meshed with the pinion gear 23. The pinion gear 23 and the intermediate gear 22 are torque transmitting means for transmitting torque of the driving motor 7 to the valve gear 21.

The pinion gear 23 is the motor side gear, which is formed of metallic material in a single piece of a predetermined shape and rotates integrally with the motor shaft of the driving motor 7. The one end of the intermediate shaft 24 with respect to the axial direction is fitted into a concave portion formed in an inner wall surface of the gear cover 9. The other end of the intermediate shaft 24 is press-fitted into a concave portion formed in the outer wall surface of the bore wall portion 15 of the throttle body 1.

The valve gear 21 is formed of resin material in a single piece substantially in a predetermined shape of a circular ring. A gear portion 27 meshed with the small diameter gear 25 of the intermediate reduction gear 22 is integrally formed on an outer peripheral surface of the lower end portion of the valve gear 21 in Fig. 2. A fully closed position stopper portion is integrally formed on the outer periphery of the valve gear 21. The fully closed position stopper portion functions as a stopped portion, which strikes a fully closed position stopper 30 and rests against the fully closed position stopper 30 when the throttle valve 2 closes fully. A fully open position stopper portion is integrally formed on the outer periphery of the valve gear 21. The fully open position stopper portion functions as a stopped portion, which strikes a fully open position stopper and rests against the fully open position stopper when the throttle valve 2 opens fully.

One coil spring includes a return spring 31 and a default spring 32, which are formed by winding both ends of the one coil spring in different directions. The one coil spring is fitted between the outer wall surface (the right end surface in Fig. 2) of the bore wall portion 15 of the throttle body 1, or a bottom wall surface of a cylindrical concave of the gear case 8, and the left end surface of the valve gear 21 in Fig. 2. An U-shaped hook portion is formed by bending a connected portion (a middle) between the return spring 31 and the default spring 32 into an U-shape. The U-shaped hook portion is held by an intermediate stopper member.

An opener portion 33 and a cylindrical spring inner periphery guide 34 are formed integrally from a surface of the valve gear 21 on the throttle body 1 side (the left side in Fig. 2) so that the opener portion 33 and the spring inner periphery guide 34 protrude leftward in Fig. 2. The opener portion 33 is formed in the shape of a round bar and rotates with the throttle shaft 3. The cylindrical spring inner periphery guide 34 holds an inner peripheral side of the default spring 32 of the one coil spring. A rotor is formed of metallic material of the iron family (the magnetic material) radially inside the spring inner periphery guide 34 through the insert molding.

A valve gear side spring hook and an engaged portion are integrally formed on the opener portion 33. The other end of the default spring 32 of the one coil spring is engaged to the valve gear side spring hook. The engaged portion is engaged to the U-shaped hook portion as the connected portion between the return spring 31 and the default spring 32 so that the engaged portion can be freely engaged to and disengaged from the U-shaped hook portion. Multiple side deviation preventing guides are formed on the opener portion 33 near the connected portion for preventing further movement of the U-shaped hook portion of the one coil spring in the axial direction (the lateral direction in Fig. 2).

The spring inner periphery guide 34 is disposed substantially coaxially with the bearing accommodating portion 16, which doubles as a spring inner periphery guide for holding a radially inner side of the return spring 31 of the one coil spring. The external diameter of the spring inner periphery guide 34 substantially coincides with that of the bearing accommodating portion 16 and the spring inner periphery guide 34 faces the bearing accommodating portion 16. The spring inner periphery guide 34 holds the inner peripheral side of the one coil spring in a range from the return spring 31 near the U-shaped hook portion of the one spring coil to a position near the other end of the default spring 32. The bearing accommodating portion 16 is integrally formed from the outer wall surface of the bore wall portion 15 of the throttle body 1, or from the bottom wall surface of the cylindrical concave portion of the gear case 8, rightward in Fig. 2 and holds the inner peripheral side of the return spring 31 of the one coil spring.

The fully closed position stopper 30 is formed in the shape of a boss protruding downward in Fig. 2 (radially inward) from the inner peripheral wall of the gear case 8 on a central line of the gear case 8 in the longitudinal direction thereof on the upper side of the gear case 8 of the throttle body 1 in Fig. 2. A fully closed position stopper member (an adjusting screw) 35 is screwed into the fully closed position stopper 30. The fully closed position stopper member 35 has a fully closed position stopping portion, which the fully closed position stopper portion integrally formed in the valve gear 21 strikes and rests against when the throttle valve 2 closes and reaches the fully closed position.

An intermediate position stopper is formed in the shape of a boss protruding downward (radially inward) from the inner peripheral wall of the gear case 8 in Fig. 2 on the upper side of the gear case 8 of the throttle body 1 in Fig. 2. An intermediate stopper member (an adjusting screw, a default stopper) having an intermediate position stopping portion is screwed into the intermediate position stopper. The intermediate position stopping portion mechanically holds or stops the throttle valve 2 at a predetermined intermediate position (an intermediate stopper position) between the fully closed position (the fully closed position stopper position) and the fully open position (the fully open position stopper position) by using the differently directed biasing forces of the return spring 31 and the default spring 32 of the one coil spring when current supply to the driving motor 7 is interrupted by some causes.

The one coil spring is a coil-shaped spring formed by integrating the return spring 31 and the default spring 32 and by winding the one end of the return spring 31 and the other end of the default spring 32 in the different directions. The U-shaped hook portion is formed at the connected portion between the return spring 31 and the default spring 32. The U-shaped hook portion is held by the intermediate stopper member when the power supply to the driving motor 7 is interrupted by some causes. The return spring 31 is a first spring, which is formed of a round bar of spring steel in the shape of a coil and has a returning function for biasing the throttle valve 2 in a returning direction from the fully open position to the intermediate position through the opener portion 33. The default spring 32 is a second spring, which is formed of a round bar of spring steel in the shape of a coil and has an opening function for biasing the throttle valve 2 in another returning direction from the fully closed position to the intermediate position through the opener portion 33.

A spring body side hook is disposed at the one end of the return spring 31. The spring body side hook is engaged to or held by a body side spring hook integrally formed on the outer wall surface of the bore wall portion 15, or the bottom wall surface of the gear case 8, of the throttle body 1. A spring gear side hook is formed on the other end of the default spring 32. The spring gear side hook is engaged to or held by the valve gear side spring hook of the opener portion 33 on the valve gear 21 side.

The gear cover 9 is formed of thermoplastic resin, which electrically insulates respective end terminals of the above explained throttle position sensor from each other. The gear cover 9 has a flange-shaped connecting end surface (a fitted portion), which is screwed and fastened to another flange-shaped connecting end surface (a fitting portion) formed on an opening side of the gear case 8 with fastening members such as the fastening bolts or the tightening screws. A ring-shaped rubber sealing member (an elastic sealing member, a gasket, a rubber packing) 36 for preventing the intrusion of the extraneous matters into the gear case 8 is disposed between the connecting end surface of the gear case 8 and the connecting end surface of the gear cover 9.

As shown in Figs. 1 and 2, the rolling bearing 4 of the present embodiment includes multiple steel balls (rolling members) 43, first and second lip seals (sealing members) 44, 45 and first and second retainers 46, 47. The steel balls 43 are slidably accommodated between two orbit rings of an inner ring 41 and an outer ring 42 and roll between orbit surfaces of the inner ring 41 and the outer ring 42. The first and second lip seals 44, 45 are fitted between the two orbit rings of the inner ring 41 and the outer ring 42 so that the first and second lip seals 44, 45 are disposed on both sides of the steel balls 43 in the axial direction. The first and second retainers 46, 47 prevent drop out of the multiple steel balls 43. The rolling bearing 4 is a ball bearing for rotatably holding the one end of the throttle shaft 3 by using the rolling friction of the steel balls 43 accommodated between the orbit surfaces of the inner ring 41 and the outer ring 42. Concave portions in the shape of half cylinders or hemispheres are formed circumferentially in the first and second retainers 46, 47 at predetermined intervals. Instead of the steel balls 43, rolling members such as rollers can be employed.

The inner ring 41 is formed of metallic material such as aluminum alloy or cupper-zinc alloy casting in the shape of a circular ring. A groove portion 48 is formed on the orbit surface of the inner ring 41 facing the outer ring 42. A section of the groove portion 48 along the axial direction is substantially in the shape of an arc corresponding to the shape of the rolling member 43. The inner ring 41 is an inner race, which is press-fitted air-tightly to the outer periphery of the one end of the throttle shaft 3 and rotates integrally with the throttle shaft 3. A convex stepped portion (an axial stopper portion, a stopping portion) 51 protruding radially outward is integrally formed on the left side of the groove portion 48 (on the air intake passage side) on the inner ring 41 in Fig. 1. More specifically, the external diameter of the orbit surface of the inner ring 41 is set larger than the external diameter of the outer peripheral surface of the inner ring 41 on the air intake passage side. Another convex stepped portion (an axial stopper portion, a stopping portion) 52 protruding radially outward is integrally formed on the right side (the gear cover side) of the groove portion 48 on the inner ring 41 in Fig. 1. More specifically, the external diameter of the orbit surface of the inner ring 41 is set larger than the external diameter of the outer peripheral surface of the inner ring 41 on the gear cover side. The stepped portions 51, 52 are first and second stopping portions for limiting the movement of inner peripheral portions of the first and second lip seals 44, 45 toward the inside of the rolling bearing 4 by stopping the inner peripheral portions of the first and second lip seals 44, 45 when the inner peripheral portions of the first and second lip seals 44, 45 move toward the inside of the rolling bearing 4 in the axial direction.

The outer ring 42 is formed of the same metallic material as the inner ring 41 in the shape of a circular ring. The outer ring 42 is formed with a groove portion 49 on the orbit surface of the outer ring 42 facing the inner ring 41-A section of the groove portion 49 along the axial direction is substantially in the shape of an arc corresponding to the shape of the rolling member 43. The outer ring 42 is an outer race air-tightly press-fitted into the inner periphery of the bearing accommodating portion 16 of the throttle body 1. A convex stepped portion 53 protruding radially inward is integrally formed on the left side (the air intake passage side) of the groove portion 49 on the outer ring 42. The outer peripheral portion of the first lip seal 44 is engaged to the stepped portion 53. More specifically, the internal diameter of the orbit surface of the outer ring 42 is set smaller than the internal diameter of the inner peripheral surface on the air intake passage side. A convex stepped portion 54 protruding radially inward is integrally formed on the right side (the gear cover side) of the groove portion 49 on the outer ring 42 in Fig. 1. The outer peripheral portion of the second lip seal 45 is engaged to the stepped portion 54. More specifically, the internal diameter of the orbit surface of the outer ring 42 is set smaller than the internal diameter of the outer peripheral surface of the outer ring 42 on the gear cover side.

The first lip seal 44 is fitted in a ring-shaped clearance formed between the two orbit rings of the inner ring 41 and the outer ring 42 on the air intake passage side. The first lip seal 44 is formed of rubber-based elastic material (nitrile rubber: NBR, or high-density nitrile rubber: H-NBR, and the like) in the shape of a circular ring plate, which is reinforced with a reinforcing member (a fitting ring) 61 made of metallic material. If the first lip seal 44 is sandwiched between the two orbit rings, the first lip seal 44 elastically changes its form in radial directions and fluid-tightly contacts the two orbit rings. The first lip seal 44 is formed with a lip portion (a radial sealing portion) 55 on a contacting portion (an inner peripheral side portion), which slidably contacts an outer peripheral surface of the inner ring 41 on the air intake passage side. The first lip seal 44 is formed with an engaged portion (another radial sealing portion) 56, which is engaged to the stepped portion 53 of the outer ring 42 on the air intake passage side.

The second lip seal 45 is fitted in a ring-shaped clearance formed between the two orbit rings of the inner ring 41 and the outer ring 42 on the gear cover side. The second lip seal 45 is formed of rubber-based elastic material (nitrile rubber: NBR, or high-density nitrile rubber: H-NBR, and the like) in the shape of a circular ring plate, which is reinforced with a reinforcing member (a fitting ring) 62 made of metallic material. If the second lip seal 45 is sandwiched between the two orbit rings, the second lip seal 45 elastically changes its form in radial directions and fluid-tightly contacts the two orbit rings. The second lip seal 45 is formed with a lip portion (a radial sealing portion) 57 on a contacting portion (an inner peripheral side portion), which slidably contacts an outer peripheral surface of the inner ring 41 on the gear cover side. The second lip seal 45 is formed with an engaged portion (another radial sealing portion) 58, which is engaged to the stepped portion 54 of the outer ring 42 on the gear cover side.

Next, a function of the electronic control type throttle valve control device of the present embodiment will be explained based on Fig. 2.

If an operator (a driver) depresses an accelerator pedal, the accelerator position sensor inputs the accelerator position signal to the ECU. The ECU energizes the driving motor 7 to rotate the motor shaft of the driving motor 7 so that the throttle valve 2 opens to a predetermined opening degree. The torque of the driving motor 7 is transmitted to the valve gear 21 through the pinion gear 23 and the intermediate reduction gear 22. Thus, the valve gear 21 rotates. Therefore, the throttle shaft 3 rotates by a predetermined rotational angle and the throttle valve 2 is driven to rotate in an opening direction to open from the intermediate position toward the fully open position. The biasing force of the default spring 32 does not participate in the rotation of the throttle valve 2 in the opening direction but maintains a state in which the opener portion 33 is sandwiched between the end of the default spring 32 on the connected portion side and the spring gear side hook.

To the contrary, if the driver returns the accelerator pedal, the motor shaft of the driving motor 7 rotates in an opposite direction. Meanwhile, the throttle valve 2, the throttle shaft 3 and the valve gear 21 rotate in the opposite directions. Thus, the throttle shaft 3 rotates by a predetermined rotational angle and the throttle valve 2 is driven to rotate in a closing direction from the intermediate position toward the fully closed position (more specifically, in the closing direction opposite to the opening direction of the throttle valve 2). Accordingly, the fully closed position stopper portion integrally formed on the outer periphery of the valve gear 21 strikes the fully closed position stopper member 35, so the throttle valve 2 is held at the fully closed position. The biasing force of the return spring 31 does not participate in the rotation of the throttle valve 2 in the closing direction. The direction of the current applied to the driving motor 7 is reversed when the throttle valve 2 crosses the intermediate position.

If the current supply to the driving motor 7 is interrupted by some causes, the engaged portion of the opener portion 33 will be made to contact the U-shaped hook portion of the one coil spring by a return spring function of the return spring 31 and a default spring function of the default spring 32 in a state in which the opener portion 33 is sandwiched between the end of the default spring 32 on the connected portion side and the spring gear side hook. The return spring function of the return spring 31 is exerted by the biasing force for biasing the throttle valve 2 in the direction to return the throttle valve 2 from the fully open position to the intermediate position through the opener portion 33. The default spring function of the default spring 32 is exerted by the biasing force for biasing the throttle valve 2 in the direction to return the throttle valve 2 from the fully closed position to the intermediate position through the opener portion 33. Thus, the throttle valve 2 can be surely held at the intermediate position. Therefore, escaping running can be performed in the case where the current supply to the driving motor 7 is interrupted by some causes.

The electronic control type throttle valve control device, which includes the rolling bearing 4 disposed between the inner periphery of the bearing accommodating portion 16 of the bore wall portion 15 separating the air intake passage and the gear accommodating portion of the throttle body 1 and the outer periphery of the one end of the throttle shaft 3 integrally rotating with the throttle valve 2, can be used as an internal combustion engine throttle valve device for controlling an air intake quantity taken into a turbocharger type supercharged engine. The supercharged engine includes a supercharging device (a turbocharger, for instance) disposed upstream of the throttle valve 2 with respect to the flow direction of the intake air for increasing an intake pressure of the intake air above the atmospheric pressure and for supplying high-density air into a cylinder.

In the case where the above electronic control type throttle valve control device is used in the supercharged engine, as shown in Fig. 7, the pressure difference between the intake pressure in the air intake passage formed inside the bore wall portion of the throttle body and the atmospheric pressure outside the bore wall portion of the throttle body is large compared to a natural air intake type engine. Therefore, a trouble that the lip seal 107 on the right side in Fig. 7 (on the outside, on the opposite side from the air intake passage) separates may be caused. A high pressure is applied to the lip seal 106 on the left side (on the air intake passage side) by the supercharging pressure. The lip portion 111 of the lip seal 106 is curled up toward the inside of the rolling bearing (the space where the multiple steel balls 105 are accommodated) and the pressure inside the rolling bearing increases. The pressure acts also on the lip seal 107 on the gear cover side. The lip portion 112 of the lip seal 107 on the gear cover side will be curled up toward the outside of the rolling bearing and the lip seal 107 on the gear cover side will separate from the rolling bearing. Thus, the above trouble is caused.

The lip seal 107 on the gear cover side originally has the function of preventing the intrusion of the extraneous matters such as the dust or the moisture to the inside of the rolling bearing, or the leakage of the lubrication oil held inside the rolling bearing. Therefore, in the case where the lip seal 107 on the gear cover side separates from the rolling bearing, such a trouble that the extraneous matters such as the dust or the moisture intrudes into the rolling bearing or the lubrication oil held inside the rolling bearing leaks outward will be caused.

As for the above described lip seal separation phenomenon, the lip seal separation is promoted when a following expression (1) is satisfied.

$$PB > PC + \alpha, \qquad (1)$$

In the expression (1), PB represents the pressure radially inside the bore (on the air intake passage side), PC is the pressure on the gear cover side (the atmospheric pressure: latm) and $\alpha$ is a certain value. Also the lip seal separation is promoted when a following expression (2) is satisfied.

$$QB > QC, \qquad (2)$$

In the expression (2), QC represents a flow rate of the leak air on the gear cover side at the time when a pressure (an inner pressure) inside the rolling bearing is P, and QB is a flow rate of leak air on the bore side corresponding to the pressure difference (PB-P).

To the contrary, the lip seal separation is inhibited when a following expression (3) is satisfied.

$$QB \leq QC, \qquad (3)$$

These facts were ascertained through experimentation and the like. The pressure P is the inner pressure at the time when the gear cover side (the outside) lip seal 107 separates.

In the present embodiment, in order to prevent the lip portion 55 of the first lip seal 44 on the bore side (the air intake passage side) from being deformed and curled up by the supercharging pressure, the movement of the lip portion 55 is limited by the stepped portion (the stopper portion) 51 formed on the outer peripheral surface of the inner ring 41 even if the high supercharging pressure above the atmospheric pressure acts on the first lip seal 44 and the lip portion 55 of the first lip seal 44 moves toward the inside of the rolling bearing 4, or toward the steel balls 43 side. Thus, the deformation and the curling of the lip portion 55 of the first lip seal 44 on the bore side due to the supercharging pressure can be prevented. Therefore, the pressure increase inside the rolling bearing 4 can be prevented.

Accordingly, the lip portion 57 of the second lip seal 45 on the gear cover side is not curled up to the outside of the rolling bearing 4, so the separation of the second lip seal 45 on the gear cover side from the rolling bearing 4 can be prevented. Thus, the intrusion of the extraneous matters such as the dust or the moisture into the rolling bearing 4 or the outward leakage of the lubrication oil held inside the rolling bearing 4 can be prevented.

(Second Embodiment)

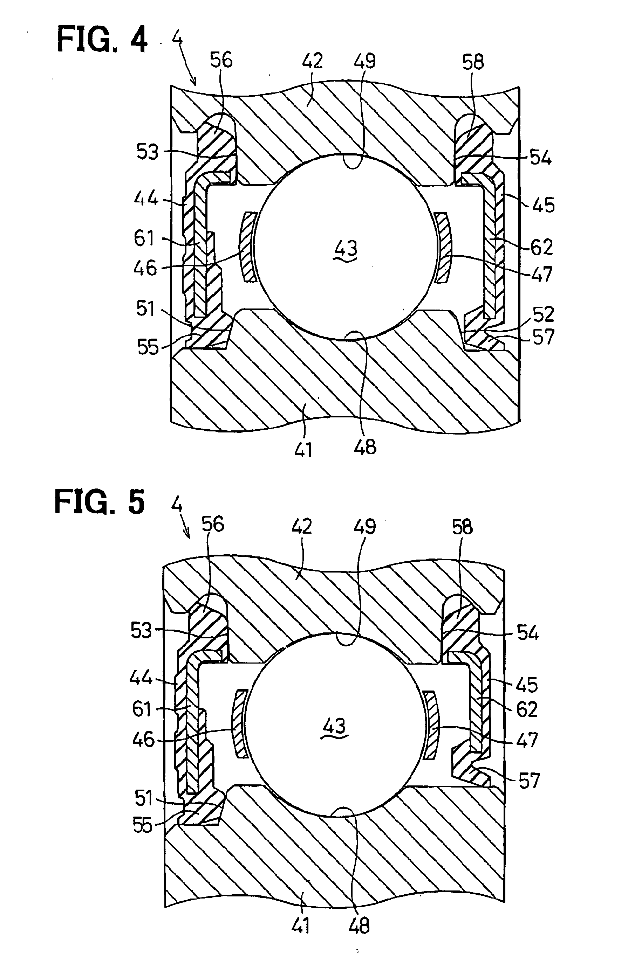

Next, the rolling bearing 4 according to the second embodiment will be explained based on Fig. 3.

In the present embodiment, the stepped portions (the stopper portions) 51, 52 are eliminated from the outer peripheral surface of the inner ring 41 of the rolling bearing 4. Rigidity of the lip portion 55 of the first lip seal 44 on the side (the bore side, the air intake passage side) receiving the high pressure (the supercharging pressure) from the one side in the axial direction is set higher than rigidity of the lip portion 57 of the second lip seal 45 on the side (the gear cover side, the outside) receiving the low pressure (the atmospheric pressure) from the other side in the axial direction. This structure can be achieved by increasing the axial thickness of the lip portion 55 compared to the lip portion 57 or by increasing the rigidity of the material of the lip portion 55 compared to the lip portion 57 so that tension between the outer peripheral surface of the inner ring 41 and the lip portion 55 is increased.

In this case, even if the high pressure (the supercharging pressure) acts on the first lip seal 44 having the higher rigidity from the one side in the axial direction, the pressure inside the rolling bearing 4, or the pressure in the steel ball accommodating portion (the rolling member accommodating portion), can be reduced by leaking the air from the second lip seal 45 having the lower rigidity. Thus, the lip portion 55 of the second lip seal 45 having the lower rigidity can be prevented from being deformed or curled up, so the separation of the second lip seal 45 on the gear cover side from the rolling bearing 4 can be prevented.

(Third Embodiment)

Next, the rolling bearing 4 according to the third embodiment will be explained based on Fig. 4.

In the present embodiment, the rigidity of the lip portion 55 of the first lip seal 44 on the bore side (the air intake passage side) of the rolling bearing 4 of the first embodiment is set higher than the rigidity of the lip portion 57 of the second lip seal 45 on the gear cover side (the outside). In this case, the functions and the effects of both of the first and second embodiments can be achieved.

(Fourth Embodiment)

Next, the rolling bearing 4 according to the fourth embodiment will be explained based on Fig. 5.

In the present embodiment, the stepped portion 52 of the inner ring 41 of the rolling bearing 4 of the third embodiment is eliminated and the second lip seal 45 on the side (the gear case side, the outside) receiving the low pressure from the other side in the axial direction is formed in the same specification as the related art. More specifically, the rigidity of the lip portion 55 of the first lip seal 44 on the side (the bore side, the air intake passage side) receiving the high pressure (the supercharging pressure) from the one side in the axial direction is set higher than the rigidity of the lip portion 57 of the second lip seal 45 on the side (the gear cover side, the outside) receiving the low pressure (the atmospheric pressure) from the other side in the axial direction.

(Modifications)

In the above embodiments, the turbocharger is employed as the supercharging device for increasing the intake pressure of the intake air above the atmospheric pressure and for supplying the high-density intake air into the cylinder. Alternatively, a supercharger may be employed as the supercharging device.

In the case of the throttle valve control device for an internal combustion engine having no supercharging device, the pressure inside the air intake passage becomes a negative pressure (an air intake pipe negative pressure) lower than the atmospheric pressure and the pressure on the right side becomes higher than the pressure on the left side in Fig. 1. In this case, the first and second lip seals 44, 45 should preferably be replaced with each other.

In the above embodiments, the hall element 13 is used as the non-contact type detection element. Alternatively, a hall IC, a magnetoresistive element and the like may be employed as the non-contact type detection element. In the above embodiments, the divided type permanent magnets 11 are used as the magnetic field sources. Alternatively, a cylindrical permanent magnet may be employed as the magnetic field source.

In the above embodiments, the gear case 8 integrally formed on the outer wall surface of the bore wall portion 15 of the throttle body 1 is formed of the metallic material such as the die-cast aluminum. Alternatively, the single piece of the gear case 8 may be formed of resin material. Alternatively, the gear case 8 may be integrally formed of the resin material on the outer wall surface of the bore wall portion 15 of the throttle body 1 formed of the resin material. Alternatively, the gear case 8 and the gear cover 9 may not be formed. A wind communication hole for connecting the gear accommodating portion surrounded by the gear case 8 and the gear cover 9 with the outside may be formed between the connecting end surface of the gear case 8 and the connecting end surface of the gear cover 9 in order to decrease the pressure difference between the gear accommodating portion and the outside.

In the above embodiments, the present invention is applied to the rolling bearing 4 for rotatably holding the throttle shaft 3 to the bearing accommodating portion 16 of the throttle body 1 of the electronic control type throttle valve control device for driving the throttle valve 2 to rotate by using the driving motor (the actuator) 7. Alternatively, the present invention may be applied to a rolling bearing 4 for rotatably holding a throttle shaft 3 to a bearing accommodating portion 16 of a throttle body 1 of an internal combustion engine throttle valve device. In this case, a lever portion mechanically connected to the accelerator pedal through a wire cable is formed instead of the power transmission device such as the valve gear 21 formed on the one end of the throttle shaft 3 and the driving motor 7. Also in this case, the accelerator operation degree can be transmitted to the throttle valve 2 and the throttle shaft 3.

In the above embodiments, the rolling bearing of the present invention is applied to the rolling bearing (the bearing device of the electronic control type throttle valve control device or the internal combustion engine throttle valve device) 4 for rotatably holding the throttle shaft 3 to the bearing accommodating portion 16 of the throttle body 1. Alternatively, the rolling bearing of the present invention may be used as a rolling bearing (a bearing device of a rotating device) for rotatably holding a shaft to a bearing accommodating portion of a fixed member such as a housing of a rotating device such as an electric motor, a generator, a compressor, a pump, a fan and the like. Alternatively, the rolling bearing of the present invention may be used as a rolling bearing (a bearing device of a power transmission device) for rotatably holding a shaft to a bearing accommodating portion of a fixed member such as a housing or a rotating member of a power transmission device (for instance, a speed change gear) for transmitting the rotating force of a driving source such as the internal combustion engine or the driving motor to a driven member such as a wheel. The rolling bearing of the present invention may be used as rolling bearings for rotatably holding shafts (pins), which are held by a planet carrier, to bearing accommodating portions of multiple rotating members such as planet pinions disposed around a sun gear of sun-and-planet gear structure used in the transmission or the reduction gears.

The present invention should not be limited to the disclosed embodiments, but may be implemented in many other ways without departing from the spirit of the invention.

In a throttle valve device for an internal combustion engine, a stepped portion (51) is formed on an outer peripheral surface of an inner ring (41) on a bore side (on an air intake passage side) in order to limit movement of a lip portion (55) of a first lip seal (44) on the bore side toward an inside of a rolling bearing (4). Thus, even if a high supercharging pressure above an atmospheric pressure acts on the first lip seal (44), deformation and curling of the lip portion (55) due to the supercharging pressure can be prevented. As a result, separation of a second lip seal (45) on a gear cover side (on an outside) from the rolling bearing (4) can be prevented.

## Claims

1. A rolling bearing (4) for accommodating a plurality of rolling members (43) between two orbit rings (41, 42) of an inner ring (41) and an outer ring (42) and for rotatably holding a shaft (3) to a bearing accommodating portion (16) of a fixed member (1) or a rotating member, the plurality of rolling members (43) rolling between orbit surfaces (48, 49) of the inner ring (41) and the outer ring (42), **characterized in that**

   the rolling bearing (4) includes two sealing members (44, 45) disposed between the two orbit rings (41, 42) so that the two sealing members (44, 45) are disposed on both sides of the rolling members (43) in an axial direction, and

   the rolling bearing (4) is formed so that rigidity of the sealing member (44, 45) receiving a relatively high pressure from one side in the axial direction is set higher than rigidity of the sealing member (44, 45) receiving a relatively low pressure from the other side in the axial direction.

2. The rolling bearing (4) as in claim 1, further **characterized by**

   a stopper portion (51, 52) formed on at least one of the two orbit rings (41, 42) for limiting movement of at least the sealing member (44, 45) having the higher rigidity out of the two sealing members (44, 45) toward the rolling members (43).

3. A rolling bearing (4) for accommodating a plurality of rolling members (43) between two orbit rings (41, 42) of an inner ring (41) and an outer ring (42) and for rotatably holding a shaft (3) to a bearing accommodating portion (16) of a fixed member (1) or a rotating member, the plurality of rolling members (43) rolling between orbit surfaces (48, 49) of the inner ring (41) and the outer ring (42), **characterized by**:

   two sealing members (44, 45) disposed between the two orbit rings (41, 42) so that the two sealing members (44, 45) are disposed on both sides of the rolling members (43) in an axial direction; and
   a stopper portion (51, 52) formed on at least one of the two orbit rings (41, 42) for limiting movement of at least the sealing member (44, 45) receiving a relatively high pressure out of the two sealing members (44, 45) toward the rolling members (43).

4. The rolling bearing (4) as in claim 3, further **characterized in that**

   the rolling bearing (4) is formed so that rigidity of the sealing member (44, 45) receiving the relatively high pressure from one side in the axial direction is set higher than rigidity of the sealing member (44, 45) receiving a relatively low pressure from the other side in the axial direction.

5. The rolling bearing (4) as in claim 2 or 3, further **characterized in that**

   the stopper portion (51, 52) is a stepped portion formed on at least one of the two orbit rings (41, 42).

6. The rolling bearing (4) as in claim 1 or 3, further **characterized in that**

   the two sealing members (44, 45) are two lip seals (44, 45), which are formed of ring-shaped rubber-based elastic members reinforced with reinforcing members (61, 62) and are fitted in ring-shaped clearances formed between the two orbit rings (41, 42), and

   the two lip seals (44, 45) elastically change shapes thereof in radial directions and fluid-tightly contact the two orbit rings (41, 42) when the two lip seals (44, 45) are sandwiched between the two orbit rings (41, 42), and include lip portions (55, 57) at contacting portions slidably contacting at least the inner ring (41).

7. A throttle valve device for an internal combustion engine including:

   a throttle body (1) for providing an air intake passage therein for sending intake air into the internal combustion engine;
   a throttle valve (2), which is held in the air intake passage so that the throttle valve (2) can open or close for regulating a quantity of the intake air sent into the internal combustion engine;
   a throttle shaft (3), which holds the throttle valve (2) and is held to a bearing accommodating portion (16, 17) of the throttle body (1); and
   a rolling bearing (4) for accommodating a plurality of rolling members (43) between two orbit rings (41, 42) of an inner ring (41) and an outer ring (42) and for rotatably holding the throttle shaft (3) to the bearing accommodating portion (16) of the throttle body (1), the plurality of rolling members (43) rolling between orbit surfaces (48, 49) of the inner ring (41) and the outer ring (42), **characterized in that**
   the rolling bearing (4) includes two sealing members (44, 45) disposed between the two orbit rings (41, 42) so that the two sealing members (44, 45) are disposed on both sides of the rolling members (43) in an axial direction, and
   the rolling bearing (4) is formed so that rigidity of the sealing member (44, 45) receiving a relatively high pressure from one side in the axial direction is set higher than rigidity of the sealing member (44, 45) receiving a relatively low pres-

EP 1 452 757 A2

sure from the other side in the axial direction.

8. The throttle valve device for the internal combustion engine as in claim 7, further **characterized in that**
the internal combustion engine includes a supercharging device disposed upstream of the throttle valve (2) with respect to a flow direction of the intake air for increasing an intake pressure of the intake air above an atmospheric pressure and for supplying the high-density intake air into a cylinder of the internal combustion engine, and
the sealing member (44, 45) having the higher rigidity is disposed on an air intake passage side of the rolling members (43) with respect to the axial direction.

9. A throttle valve device for an internal combustion engine including:

a throttle body (1) for providing an air intake passage therein for sending intake air into the internal combustion engine;
a throttle valve (2), which is held in the air intake passage so that the throttle valve (2) can open or close for regulating a quantity of the intake air sent into the internal combustion engine;
a throttle shaft (3), which holds the throttle valve (2) and is held to a bearing accommodating portion (16, 17) of the throttle body (1); and
a rolling bearing (4) for accommodating a plurality of rolling members (43) between two orbit rings (41, 42) of an inner ring (41) and an outer ring (42) and for rotatably holding the throttle shaft (3) to the bearing accommodating portion (16) of the throttle body (1), the plurality of rolling members (43) rolling between orbit surfaces (48, 49) of the inner ring (41) and the outer ring (42), **characterized in that**
the rolling bearing (4) includes two sealing members (44, 45) disposed between the two orbit rings (41, 42) so that the two sealing members (44, 45) are disposed on both sides of the rolling members (43) in an axial direction, and
the rolling bearing (4) includes a stopper portion (51, 52) formed on at least one of the two orbit rings (41, 42) for limiting movement of at least the sealing member (44, 45) receiving a relatively high pressure out of the two sealing members (44, 45) toward the rolling members (43).

10. The throttle valve device for the internal combustion engine as in claim 9, further **characterized in that**
the internal combustion engine includes a supercharging device disposed upstream of the throttle valve (2) with respect to a flow direction of the intake air for increasing an intake pressure of the intake air above an atmospheric pressure and for supplying the high-density intake air into a cylinder of the internal combustion engine, and
the sealing member (44, 45) receiving the relatively high pressure is disposed on an air intake passage side of the rolling members (43) with respect to the axial direction.

11

# FIG. 1

# FIG. 3

# FIG. 2

## FIG. 4

4

56  42  49  58

53

54

44

45

61

62

46

47

51

52

55

57

43

41  48

## FIG. 5

4

56  42  49  58

53

54

44

45

61

62

46

47

51

57

55

43

41  48

## FIG. 6
### RELATED ART

## FIG. 7
### RELATED ART